# EUROPÄISCHE PATENTSCHRIFT

(11) **EP 1 833 699 B1**
(45) Veröffentlichungstag und Bekanntmachung des Hinweises auf die Patenterteilung: **03.07.2013**
(21) Anmeldenummer: 05797285.3
(22) Anmeldetag: 07.10.2005
(51) Int. Cl.: B60N 2/02, B60N 2/44, F16H 25/20, F16H 57/02

(54) **HALTEVORRICHTUNG**
HOLDING DEVICE
DISPOSITIF DE MAINTIEN

(30) Priorität: 30.12.2004 DE 102004063538
(43) Veröffentlichungstag der Anmeldung: 19.09.2007
(73) Patentinhaber: ROBERT BOSCH GMBH, 70442 Stuttgart (DE)
(72) Erfinder: OBERLE, Hans-Juergen, 76437 Rastatt (DE); SCHWENDEMANN, Franz, 77833 Ottersweier (DE); LIENIG, Andreas, 77815 Buehl (DE)
(86) Internationale Anmeldenummer: PCT/EP2005/055100
(87) Internationale Veröffentlichungsnummer: WO 2006/072476

(56) Entgegenhaltungen:
- DE-U1- 29 924 108
- US-B1- 6 322 146
- PATENT ABSTRACTS OF JAPAN Bd. 2003, Nr. 12, 5. Dezember 2003 (2003-12-05) -& JP 2004 114773 A (JIDOSHA DENKI KOGYO CO LTD), 15. April 2004 (2004-04-15)

## Beschreibung

### Stand der Technik

Die Erfindung betrifft eine Haltevorrichtung zum Halten einer Verstelleinrichtung für die fremdkraftbetätigte Verstellung von Elementen in einem Kraftfahrzeug. Speziell betrifft die Erfindung eine Haltevorrichtung zum Halten einer Verstelleinrichtung, die zum Verstellen eines Sitzelementes oder einer Lenksäule dient.

Aus der EP 0 759 374 B1 ist eine Vorrichtung zum Verstellen eines Sitzes in einem Kraftfahrzeug bekannt. Bei der bekannten Vorrichtung ist ein Getriebegehäuse vorgesehen, in das ein Ende einer Gewindespindel eingeführt ist und innerhalb dem die Gewindespindel sowohl axial als auch radial gelagert ist. Im montierten Zustand werden die insbesondere beim Bremsen und Beschleunigen auftretenden Kräfte von dem Sitz über das Getriebegehäuse in die Karosserie eingeleitet. Wenn das Kraftfahrzeug aber aus einer gewissen Geschwindigkeit abrupt zum Stillstand kommt, dann gelangen durch den Sitz bzw. durch die auf dem Sitz befindliche Person erhebliche Kräfte auf das aus Kunststoff bestehende Getriebegehäuse. Bei dieser Belastung bricht das bekannte Getriebegehäuse, wobei noch eine gewisse Relatiwerschiebung des Sitzes auftritt Zur βegrenzung dieser Relatiwerschiebung (crash-Fall) ist bei der bekannten Vorrichtung ein eine Stützschulter aufweisender Bügel vorgesehen, der die Bewegung der Gewindespindel begrenzt, wobei eine Gegenschulter einer mit der Gewindespindel verbundenen Gewindemutter mit der Stützschulter des Bügels zur Anlage kommt. Auf diese Weise wird trotz des Brechens des Kunststoffgehäuses das Getriebegehäuse in seiner Lage gehalten.

Die aus der EP 0 759 374 B1 bekannte Vorrichtung zum Verstellen eines Sitzes in einem Kraftfahrzeug hat den Nachteil, dass einerseits das aus Kunststoff bestehende Getriebegehäuse stabil genug ausgeführt sein muss, um im gewissen Rahmen die speziell bei stärkeren Verzögerungen auftretenden Kräfte aufzunehmen. Andererseits hält das aus Kunststoff bestehende Gehäuse einer sehr starken Verzögerung, wie sie bei einem Verkehrsunfall auftritt, nicht stand, so dass zusätzlich der aus Metall bestehende Bügel zur Gewährleistung der Sicherheit vorgesehen sein muss. Die aus der EP 0 759 374 B1 bekannte Vorrichtung ist daher im Vergleich zu einer Vorrichtung ohne den als Schutzmaßnahme vorgesehenen Bügel vergleichsweise aufwändig und mit höheren Produktionskosten verbunden.

Mit der US 6,322,146 B1 ist eine Vorrichtung zur Sitzverstellung nach dem Oberbegriff des Anspruchs 1 bekannt geworden, bei der eine Gewindespindel in einer Gewindehülse gelagert ist. Die Gewindehülse ist in einem Getriebegehäuse angeordnet, das über U-förmige Befestigungselemente verschwenkbar gelagert wird.

Die DE 29924108 U1 zeigt einen Spindel- oder Schneckenantrieb für Verstelleinrichtungen im Kraftfahrzeug mit einer Spindel und einem Getriebegehäuse zur Aufnahme eines Getriebes, wobei das Getriebegehäuse in einer U-förmigen Getriebeaufnahme gelagert ist.

### Vorteile der Erfindung

Die erfindungsgemäße Haltevorrichtung mit den Merkmalen des Anspruchs 1 hat demgegenüber den Vorteil, dass ein Tragrahmen vorgesehen ist, der zum einen geeignet ist, erhöhte Kräfte aufzunehmen, wie sie bei einem Verkehrsunfall auftreten, und zum anderen eine axiale Lagerung der Gewindestange mittels eines Lagers im Normalbetrieb gewährleistet, so dass die von der Gewindestange axial in das Lager eingeleiteten Kräfte auch im gewöhnlichen Betrieb von dem Tragrahmen aufgenommen werden. Ein gegebenenfalls vorgesehenes Getriebegehäuse, das insbesondere aus Kunststoff bestehen kann, ist dadurch von dem größten Anteil der Kräfte entkoppelt. Ein solches Getriebegehäuse kann dann so dimensioniert sein, dass es lediglich die Betriebskräfte des Getriebes und die für die radiale Lagerung der Gewindestange erforderlichen Haltekräfte aufbringt, wodurch es erheblich einfacher und kostengünstig hergestellt werden kann.

Durch die in den Unteransprüchen aufgeführten Maßnahmen sind vorteilhafte Weiterbildungen der in dem Anspruch 1 angegebenen Haltevorrichtung möglich.

Vorteilhaft können die erste Klammer und die zweite Klammer im montierten Zustand der Haltevorrichtung abschnittsweise nebeneinander angeordnet sein oder so über Kreuz angeordnet sein, dass die erste Klammer abschnittsweise über der zweiten Klammer liegend und die zweite Klammer abschnittsweise über der ersten Klammer liegend angeordnet ist. Dadurch kann eine gewisse Elastizität des Tragrahmens in axialer Richtung erreicht werden, die kostengünstig zu realisieren ist. Bei der überkreuzten Anordnung besteht der Vorteil, dass die Klammern ineinander verhakt sind, wodurch sich eine selbsthaltende Konstruktion ergibt, bei der außerdem ein Aufbiegen der Klammern bei hoher Belastung, wie sie bei einem Verkehrsunfall auftritt, verhindert ist.

In vorteilhafter Weise sind die erste und die zweite Klammer im montierten Zustand an einem Ende des Tragrahmens flächig aufeinanderliegend angeordnet, wobei an dem Ende ein gemeinsames Auge der Klammern ausgebildet ist. Auf diese Weise ist eine einfache Befestigungsmöglichkeit geschaffen, die beispielsweise durch einen mit der Karosserie oder einem Sitzgestell verbundenen Bolzen realisiert ist. Vorzugsweise sind hierfür an dem Tragrahmen zwei derartige Augen vorgesehen, die einander gegenüber liegen. Dabei kann außerdem eine Verschwenkung des Tragrahmens um die Achse des durch die beiden Augen geführten Bolzens erfolgen, um ein Verschwenken der Giewindestange während der Verstellung des Elements des Kraftfahrzeugs, insbesondere des Sitzelements oder der Lenksäule, zu ermöglichen.

Das Lager für die axiale Lagerung der Giewindestange ist einerseits durch eine zwischen den Schenkeln des U-förmigen Tragrahmens vorgesehene Anlageplatte und andererseits durch die Klammern gegeben . Dabei kann sich das Ende der Giewindestange auch über ein an der Anlageplatte anliegendes Kunststoffgehäuseteil an dem Tragrahmen abstützen, wodurch eine Lagerung Kunststoff auf Metall gegeben ist. Ferner kann auch zwischen der Giewindestange und den beiden Klammern eine Kunststoffscheibe angeordnet sein, um auch in der axialen Gegenrichtung eine Lagerung von Kunststoff auf Metall zu erreichen.

### Zeichnung

Bevorzugte Ausführungsbeispiele der Erfindung sind in der nachfolgenden Beschreibung anhand der beigefügten Beschreibungen näher erläutert. Es zeigt:
Fig. 1 ein erstes Ausführungsbeispiel einer erfindungsgemäßen Haltevorrichtung mit einer Gewindestange in einer vereinfachten Darstellung;
Fig. 2 ein zweites Ausführungsbeispiel einer erfindungsgemäßen Haltevorrichtung mit einer Gewindestange in einer vereinfachten Darstellung;
Fig. 3 als technologischer Hintergrund eine Ausführung einer Haltevorrichtung mit einer Gewindestange in einer vereinfachten Darstellung;
Fig. 4 als technologischer Hintergrund eine Ausführung einer Haltevorrichtung mit einem Zahnrad einer Gewindestange und einem Antriebselement in einer vereinfachten Darstellung und
Fig. 5 die Haltevorrichtung der Ausführung gemäß Fig. 4 bei geneigter Gewindestange.

### Beschreibung der Ausführungsbeispiele

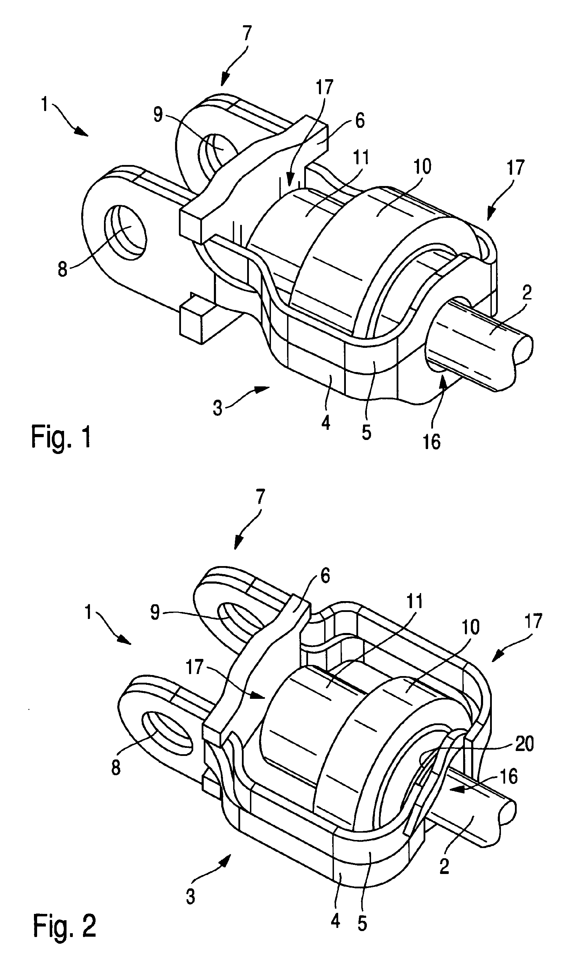

Fig. 1 zeigt ein erstes Ausführungsbeispiel einer Haltevorrichtung 1 der Erfindung mit einer Gewindestange 2, die von der Haltevorrichtung 1 aufgenommen wird und Teil einer Verstelleinrichtung ist. Die Haltevorrichtung 1 kann insbesondere zum Halten einer Verstelleinrichtung für die fremdkraftbetätigte Verstellung eines Sitzelementes, einer Lenksäule oder eines anderen Elementes eines Kraftfahrzeugs dienen. Die erfindungsgemäße Haltevorrichtung 1 eignet sich jedoch auch für andere Anwendungsfälle.

Die Haltevorrichtung 1 weist einen Tragrahmen 3 auf, der eine erste Klammer 4, eine zweite Klammer 5 und eine Anlageplatte 6 umfasst. Die erste Klammer 4 und die zweite Klammer 5 sind jeweils U-förmig ausgebildet und etwas unterhalb eines Endes 7 des Tragerahmens 3 mittels der Anlageplatte 6 miteinander verbunden. Auf der dem Ende 7 abgewandten Seite der Anlageplatte 6 sind die erste Klammer 4 und die zweite Klammer 5 nebeneinanderliegend angeordnet. Auf der Seite des Endes 7 der Anlageplatte 6 weisen die erste Klammer 4 und die zweite Klammer 5 jeweils an jedem Schenkel Aussparungen auf, wodurch einerseits ein Auge 8 und andererseits ein Auge 9 des Tragrahmens 3 ausgebildet ist. Die Augen 8 und 9 dienen zum Hindurchführen eines Bolzens oder dergleichen, der mit einem Teil einer Sitzkonstruktion, einem Karosserieteil oder dergleichen verbunden ist. Die Zusammenwirkung des Bolzens mit den Augen 8, 9 ermöglicht dabei eine Verschwenkung der Haltevorrichtung 1 um eine durch die Augen 8, 9 definierte Achse. Dadurch wird eine Verschwenkung der Gewindestange 2 ermöglicht, wie sie bei der fremdkraftbetätigten Verstellung eines Elements eines Kraftfahrzeugs erfolgen kann. Im Bereich des Tragrahmens 3 auf der Seite des Endes 7 bezüglich der Anlageplatte 6 und insbesondere im Bereich der Augen 8, 9 sind die erste Klammer 4 und die zweite Klammer 5 jeweils flächig aufeinanderliegend angeordnet.

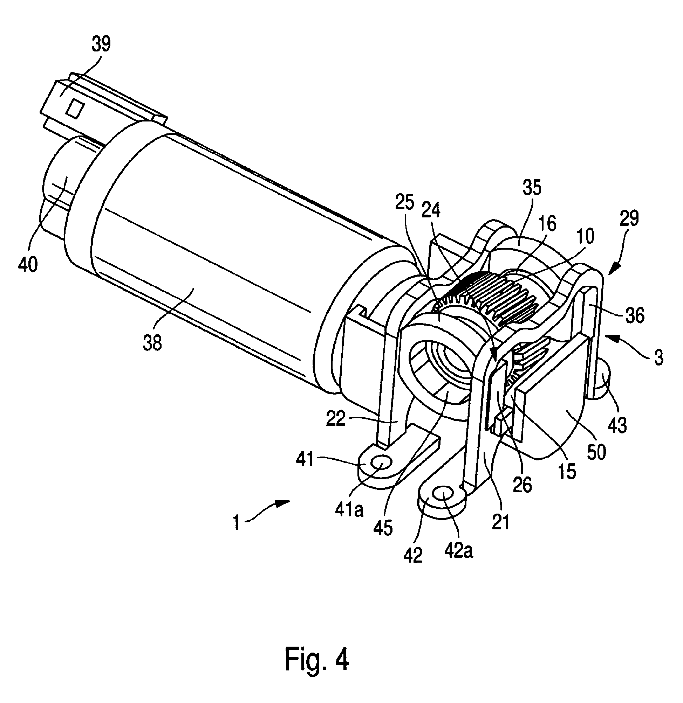

Die Gewindestange 2 weist ein in der Fig. 1 vereinfacht dargestelltes Zahnrad 10 und ein Endstück 11 auf. Das Endstück 11 liegt vorzugsweise über ein (nicht dargestelltes) Kunststoffelement an der vorzugsweise aus Metall ausgebildeten Anlageplatte 6 an, um eine axiale Lagerung der Gewindestange 2 auszubilden. Das Kunststoffelement kann dabei ein vorzugsweise plattenförmig ausgebildetes Gehäuseteil eines Getriebegehäuses sein, das in der Fig. 4 teilweise gezeigt und mit 50 bezeichnet ist. In das Zahnrad 10 der Gewindestange 2 greift im montierten Zustand mittels eines Zahnrads, einer Schnecke oder dergleichen ein Antriebselement 15 einer Antriebswelle 40 ein, die in der Fig. 4 dargestellt sind.

Gegenüberliegend zu dem Ende 7 des Tragrahmens 3 weisen die Klammern 4, 5 Aussparungen auf, wodurch eine Durchgangsöffnung 16 für die Gewindestange 2 ausgebildet ist. Auf diese Weise ist ein käfigförmiger Tragrahmen 3 gebildet, in dem die Gewindestange 2 in axialer Richtung einerseits durch die Anlageplatte 6 und andererseits durch die erste Klammer 4 und die zweite Klammer 5 im Bereich der Durchgangsöffnung 16 gelagert ist. Der stabile Tragrahmen 3 gewährleistet dadurch eine zuverlässige axiale Lagerung, die auch hohe Kräfte aufnehmen kann, wie sie beispielsweise bei einem Verkehrsunfall auftreten. Auf die beschriebene Weise ist ein Lager 17 der Haltevorrichtung 1 gebildet, das zur axialen Lagerung der Gewindestange 2 in dem Tragrahmen 3 dient.

Fig. 2 zeigt ein zweites erfindungsgemäßes Ausführungsbeispiel einer Haltevorrichtung 1 mit einer Gewindestange 2. Sich entsprechende Elemente sind dabei in dieser und in allen anderen Figuren mit übereinstimmenden Bezugszeichen versehen, wodurch sich eine wiederholende Beschreibung erübrigt.

In dem in der Fig. 2 dargestellten zweiten erfindungsgemäßen Ausführungsbeispiel sind die erste Klammer 4 und die zweite Klammer 5 im montierten Zustand der Haltevorrichtung 1 über Kreuz angeordnet, so dass die erste Klammer auf der dem Ende 7 abgewandten Seite der Anlageplatte 6 die erste Klammer 4 einerseits über der zweiten Klammer 5 liegend und andererseits die zweite Klammer 5 über der ersten Klammer 4 liegend angeordnet sind. Im Bereich der Augen 8, 9 sind die Klammern 4, 5 entsprechend dem ersten Ausführungsbeispiel aufeinanderliegend angeordnet.

Die Haltevorrichtung 1 des zweiten Ausführungsbeispiels hat den Vorteil, dass die Klammern 4, 5 ineinander verhakt sind, so dass auch bei großen Belastungen ein Öffnen der Klammern 4, 5 verhindert ist. Die Klammern 4, 5 können beispielsweise als gestanztes und gebogenes Metallteil ausgebildet sein. Die Anlage der Gewindestange 2 an den Klammern 4, 5 des Tragrahmens 3 erfolgt auf der Seite des Zahnrads 10 mittels eines Zwischenrings 20, um eine ebene Anlagefläche zu erreichen. Der Zwischenring 20 ist vorzugsweise aus Kunststoff ausgebildet, um eine vorteilhafte Lagerung von Metall auf Kunststoff zu erreichen.

Das in Fig. 2 dargestellte zweite Ausführungsbeispiel hat außerdem den Vorteil, dass die Materialstärke des Tragrahmens 3 durch die flächig übereinanderliegenden Klammern 4, 5 im Bereich der Durchgangsöffnung 16 verstärkt ist, insbesondere in etwa verdoppelt ist, wodurch die Festigkeit in diesem Bereich erheblich erhöht ist.

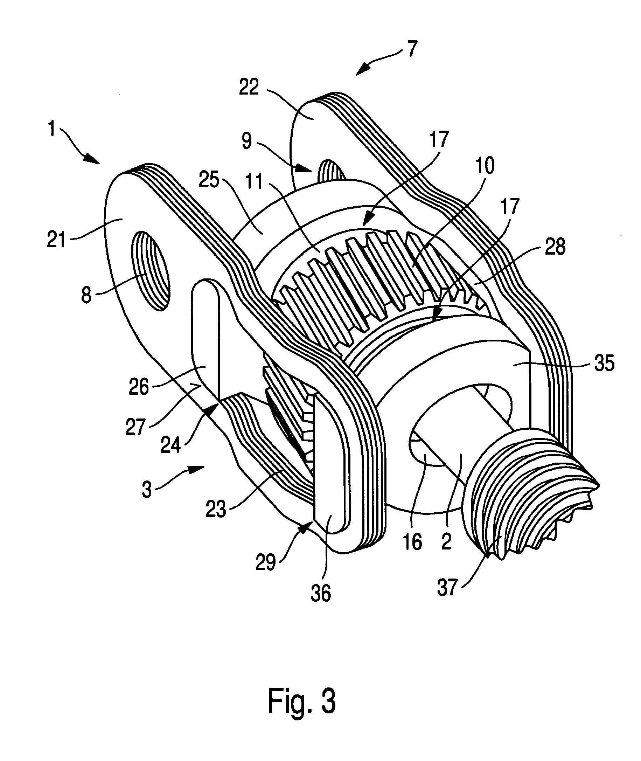

Fig. 3 zeigt eine Ausführung einer Haltevorrichtung 1 mit einer Gewindestange 2 als technologische Hintergrundinformation. Der Tragrahmen 3 der Haltevorrichtung 1 des dritten Ausführungsbeispiels weist einen ersten Bügel 21 und einen zweiten Bügel 22 auf. Der erste Bügel 21 und der zweite Bügel 22 bestehen dabei aus mehreren aufeinander geschichteten Platten, die im Wesentlichen eben ausgebildet sind. Die Platten des ersten Bügels 21 weisen dabei jeweils eine kreisförmige Öffnung auf, um das gemeinsame Auge 8 auszubilden. Entsprechend weisen auch die Platten des zweiten Bügels 22 kreisförmige Öffnungen auf, um das gemeinsame Auge 9 auszubilden. Die Augen 8 und 9 dienen entsprechend dem ersten bzw. dem zweiten Ausführungsbeispiel zum Aufnehmen eines Bolzens oder dergleichen, wodurch eine verschwenkbare Aufhängung des Tragrahmens 3 gebildet ist.

Außerdem weist der erste Bügel 21 eine Aussparung 23 auf, wodurch eine Anlagefläche 24 an dem ersten Bügel 21 ausgebildet ist. Ferner ist ein Lagerelement 25 vorgesehen, das ein ohrenförmiges Verbindungselement 26 umfasst, das durch die Aussparung 23 hindurch greift und eine Seitenfläche 27 des ersten Bügels 21 mit einer Abwinkelung von in etwa 90° hintergreift. Dadurch ist auf der Seite des ersten Bügels 21 eine Verbindung zwischen dem ersten Bügel 21 und dem Lagerelement 25 gegeben. Entsprechend weist auch der zweite Bügel 22 eine Aussparung 28 auf, wobei mit einem (nicht dargestellten) dem Verbindungselement 26 entsprechenden Verbindungselement des Lagerelementes 25 eine symmetrische Verbindung zwischen dem Lagerelement 25 und dem zweiten Bügel 22 ausgebildet ist. Ferner ist noch eine Anlagefläche 29 an dem ersten Bügel 21 ausgebildet. Ein weiteres Lagerelement 35 weist ein Verbindungselement 36 auf, das durch die Aussparung 23 hindurchgreift und die Seitenfläche 27 des ersten Bügels 21 in etwa im rechten Winkel hintergreift. Während das Verbindungselement 26 eine Verbindung im Bereich der Anlagefläche 24 gewährleistet, wird mittels des Verbindungselementes 36 im Bereich der Anlagefläche 29 eine Verbindung zwischen dem ersten Bügel 21 und dem weiteren Lagerelement 35 geschaffen. Ein dem Verbindungselement 36 entsprechendes (nicht dargestelltes) Verbindungselement des weiteren Lagerelementes 35 gewährleistet eine Verbindung zwischen dem weiteren Lagerelement 35 und dem zweiten Bügel 22.

Zwischen dem Endstück 11 und dem Lagerelement 25 ist eine axiale Lagerung der Gewindestange 2 ausgebildet, die vorzugsweise mittels einer Kunststoffplatte erfolgt, die Teil eines Getriebegehäuses sein kann. In Gegenrichtung ist eine axiale Lagerung der Gewindestange 2 durch das weitere Lagerelement 35 gegeben, wodurch insgesamt ein Lager 17 zur axialen Lagerung der Gewindestange 2 ausgebildet ist.

Die Gewindestange 2 weist ein Spindelgewinde 37 auf, das beispielsweise in eine mit einem Sitzelement, einer Lenkradsäule, einem Karosserieteil oder dergleichen verbundene Kunststoffbuchse eingreift, um eine fremdkraftbetätigte Verstellung des Sitzelementes, der Lenksäule oder eines anderen Elements des Kraftfahrzeugs zu ermöglichen. Dabei auftretende Verschwenkungen der Gewindestange 2 können durch die durch die Augen 8, 9 gegebene Lagerung ausgeglichen werden können.

Die Haltevorrichtung 1 der Ausführung gemäß Fig. 3 hat den besonderen Vorteil, dass die Steifigkeit des Tragrahmens 3, insbesondere in axialer Richtung, gezielt vorgegeben werden kann und speziell eine hohe Axialsteifigkeit möglich ist, selbst wenn das Getriebegehäuse relativ weich ausgeführt wird.

Fig. 4 zeigt eine weitere Ausführung einer Haltevorrichtung 1 als technologische Hintergrundinformation mit einem Antriebselement 15, das von einem Elektromotor 38 angetrieben ist. Der Elektromotor 38, weist einen elektrischen Anschluss 39 auf, um den Elektromotor 38 zum Ausführen der Verstellbewegung mit einer Betriebsspannung zu beaufschlagen. Ferner ist eine Antriebswelle 40 vorgesehen, die mit dem Antriebselement 15 verbunden ist. In dem vierten Ausführungsbeispiel ist die Gewindestange 2 zur Vereinfachung der Darstellung nicht gezeigt. Die Gewindestange 2 ist durch das Zahnrad 10 geführt, wobei die Gewindestange 2 entweder im Bereich eines ihrer Enden mit dem Zahnrad 10 verbunden ist oder auch durch das Zahnrad 10 und die gesamte Haltevorrichtung 1 hindurchtauchen kann, so dass auch eine Verbindung der Gewindestange 2 mit dem Zahnrad 10 in einem mittleren Bereich der Gewindestange 2 möglich ist.

Die Haltevorrichtung 1 der Ausführung gemäß Fig. 4 weist den U-förmig gebogenen ersten Bügel 21 und den U-förmig gebogenen zweiten Bügel 22 auf, die gegenüberliegend zueinander angeordnet sind. Der erste Bügel 21 weist Befestigungselemente 42, 43 auf, die zwei Befestigungspunkte der Haltevorrichtung 1 definieren, von denen in der Fig. 4 der Befestigungspunkt 42a dargestellt ist. Entsprechend weist auch der zweite Bügel 22 zwei Befestigungselemente auf, von denen in der Fig. 4 das Befestigungselement 41 dargestellt ist, welches den Befestigungspunkt 41a definiert. An den Befestigungselementen 41, 42, 43 kann eine spielfreie Befestigung an einem Karosserieteil oder dergleichen mittels Schrauben erfolgen.

Der erste Bügel 21 weist die gebogene Anlagefläche 24 und die gebogene Anlagefläche 29 auf, die ein Verschwenken des Lagerelementes 25 sowie des Lagerelementes 35 bei einer Verschwenkung der Gewindestange 2 ermöglichen. Hierbei sind auch an dem zweiten Bügel 22 entsprechend gekrümmte Lagerflächen ausgebildet. Außerdem sind die Lagerflächen 24, 29 des ersten Bügels 21 sowie die Lagerflächen des zweiten Bügels 22 in der durch die Verschwenkung definierten Gleitrichtung konkav ausgebildet.

Um das Durchtauchen der Gewindestange 2 durch die Haltevorrichtung 1 zu ermöglichen, weist das weitere Lagerelement 35 eine Durchgangsöffnung 16 auf und das Lagerelement 25 weist eine Durchgangsöffnung 45 auf. Die beiden Lagerelemente 25, 35 bilden dabei das Lager für die Gewindestange 2 in dem Tragrahmen 3. Die Lagerung erfolgt dabei vorzugsweise an einem zumindest teilweise aus Kunststoff ausgebildeten Zahnrad 10 oder mittels jeweils einer Kunststoffplatte zwischen dem Zahnrad 10 und dem Lagerelement 25 bzw. 35, wobei die jeweilige Kunststoffplatte Teil eines Getriebegehäuses sein kann. Erfolgt der Axialspielausgleich direkt zwischen dem Zahnrad 10 bzw. der Gewindestange 2 und dem Tragrahmen 3, dann werden die Bügel 21, 22 vorzugsweise leicht federnd ausgestaltet. Dadurch können zusätzliche Federelemente zum Ausgleichen des freien Spiels eingespart werden. Die Haltevorrichtung 1 des vierten Ausführungsbeispiels hat außerdem den Vorteil, dass die Haltevorrichtung 1 mit dem Elektromotor 38 und dem als Schneckenrad ausgebildeten Zahnrad 10 als Vorbaugruppe vormontiert werden kann. Dadurch wird das Bestücken der Getriebegehäuse in der Motorlinie vereinfacht. Außerdem wird eine höhere Flexibilität bei der Montage erreicht und die Zuordnung der Motoren in vorteilhafter Weise in die Nebenmontage der Vorbaugruppe übernommen. Außerdem kann die Befestigung des Tragrahmens 3 mittels der Befestigungselemente 41, 42, 43 ortsfest erfolgen, da die Verschwenkung der Gewindestange 2 durch das Gleiten des Lagerelements 25 und des weiteren Lagerelement 35 an der Anlagefläche 24 bzw. 29 gewährleistet ist. Außerdem können verschiedenste Anschraubbilder vorgegeben werden, ohne dass die Funktion der Haltevorrichtung 1 beeinträchtigt ist.

In der Fig. 4 ist zur Vereinfachung der Darstellung nur ein Teil des Getriebegehäuses 50 dargestellt. Im montierten Zustand umschließt das Getriebegehäuse 50 das Antriebselement 15 und das Zahnrad 10 zumindest im Wesentlichen.

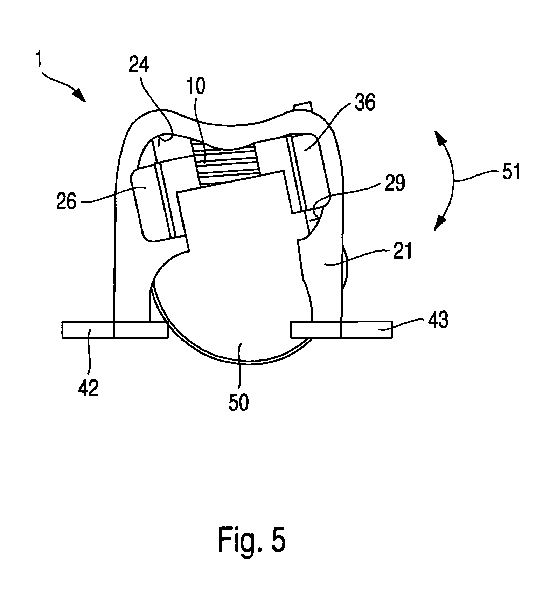

Fig. 5 zeigt die Haltevorrichtung 1 aus Fig. 4 mit dem Zahnrad 10 und dem Gehäuseteil 50 des vierten Ausführungsbeispiels in einer Seitenansicht. Dabei sind das Zahnrad 10 und das Gehäuseteil 50 in einer Stellung dargestellt, in der die Gewindestange 2 geneigt ist. Die Neigung kann dabei in beide Richtungen des Doppelpfeils 51 erfolgen. Bei der Neigung gleitet das Verbindungselement 26 an der in Gleitrichtung konkav gekrümmten Anlagefläche 24 entlang und das Verbindungselement 36 gleitet an der konkav gekrümmten Anlagefläche 29 entlang.

Der Tragrahmen 3 der Haltevorrichtung 1 kann als gestanztes Biegeteil, aus gestanzten Blechen oder aus Sinter- oder Spritzgussbauteilen zusammengesetzt sein und ist somit einfach aus festen und unterschiedlichsten Materialien herzustellen. Da das Getriebegehäuse nur die Radiallagerung und die Betriebskräfte des Elektromotors 38 aufnehmen muss, kann es einfach und dünnwandig aus einem kostengünstigen Material in Halbschalentechnik hergestellt werden.

## Patentansprüche

1. Haltevorrichtung (1) zum Halten einer Verstelleinrichtung für die fremdkraftbetätigte Verstellung von Elementen in einem Kraftfahrzeug, insbesondere eines Sitzelementes oder einer Lenksäule, mit zumindest einem Tragrahmen (3), der zum Aufnehmen zumindest einer Gewindestange (2) der Verstelleinrichtung dient, wobei ein Antriebselement (15, 40) mit der Gewindestange (2) zusammenwirkt,
wobei ein Lager (17) vorgesehen ist, das im Normalbetrieb zur axialen Lagerung der Gewindestange (2) in dem Tragrahmen (3) dient,
wobei der Tragrahmen (3) eine erste Klammer (4) und zumindest eine zweite Klammer (5) aufweist, die zumindest im Wesentlichen U-förmig ausgebildet sind, **dadurch gekennzeichnet, dass** eine Anlageplatte (6) vorgesehen ist, die an einer ersten Seite zwischen Schenkeln des zumindest im Wesentlichen U-förmigen Tragrahmens (3) mit der ersten Klammer (4) und der zweiten Klammer (5) verbunden ist, und an einer der ersten Seite gegenüberliegenden zweiten Seite des Tragrahmens (3) die erste Klammer (4) und die zweite Klammer (5) in einem mittleren Bereich eine Anlagefläche ausbilden, die Teil des Lagers (17) ist und an der die Gewindestange (2) zumindest mittelbar in der axialen Richtung entgegen der Abstützung an der Anlageplatte (6) abgestützt ist, und die Anlageplatte (6) Teil des Lagers (17) ist und die Gewindestange (2) zumindest mittelbar in axialer Richtung der Gewindestange (2) an der Anlageplatte (6) abgestützt ist.

2. Haltevorrichtung nach Anspruch 1,
**dadurch gekennzeichnet,**
**dass** die erste Klammer (4) und die zweite Klammer (5) im montierten Zustand der Haltevorrichtung (1) in Blickrichtung der Gewindestange (2) abschnittsweise nebeneinanderliegend angeordnet sind.

3. Haltevorrichtung nach Anspruch 1 oder 2,
**dadurch gekennzeichnet,**
**dass** die erste Klammer (4) und die zweite Klammer (5) im montierten Zustand der Haltevorrichtung (1) in Blickrichtung der Gewindestange (2) überkreuzt angeordnet sind, so dass die erste Klammer (4) in Blickrichtung der Gewindestange (2) abschnittsweise über der zweiten Klammer (5) liegend und die zweite Klammer (5) abschnittsweise über der ersten Klammer (4) lie end angeordnet sind, wodurch insbesondere die Klammern (4, 5) bezüglich der Richtung der Gewindestange (2) ineinander verhakt sind

4. Haltevorrichtung nach einem der Ansprüche 1 bis 3,
**dadurch gekennzeichnet,**
**dass** die erste Klammer (4) und die zweite Klammer (5) im montierten Zustand an zumindest einem Ende (7) des Tragrahmens (3) flächig aufeinanderliegend angeordnet sind und dass an dem Ende (7) ein gemeinsames Auge (8, 9) der Klammern (4, 5) ausbildet ist, wobei die Augen (8, 9) eine Achse definieren bezüglich der die Klammern (4, 5) flächig aufeinanderliegen.

5. Haltevorrichtung nach Anspruch 4,
**dadurch gekennzeichnet,**
**dass** gegenüberliegend zu dem Ende (7) des Tragerahmens (3) die Klammern (4, 5) Aussparungen aufweisen, die eine Durchgangsöffnung (16) für die Gewindestange (2) ausbilden.

6. Haltevorrichtung nach den Ansprüchen 3 und 5, **dadurch gekennzeichnet**, die Anlage der Gewindestange (2) an den Klammern (4, 5) gegenüberliegend zu dem Ende (7) des Tragerahmens (3) mittels eines Zwischenrings (20) erfolgt, der insbesondere aus Kunststoff ausgebildet ist.

7. Haltevorrichtung nach den Ansprüchen 3 und 5 oder nach Anspruch 6,
**dadurch gekennzeichnet,**
**dass** die Materialstärke des Tragrahmens (3) durch die flächig übereinanderliegenden Klammern (4, 5) im Bereich der Durchgangsöffnung (16) verstärkt, insbesondere in etwa verdoppelt ist.

## Claims

1. Holding device (1) for holding an adjustment means for the adjustment, which is actuated by external force, of elements in a motor vehicle, in particular a seat element or a steering column, with at least one supporting frame (3) which serves to receive at least one threaded rod (2) of the adjustment means, wherein a drive element (15, 40) interacts with the threaded rod (2), wherein a bearing (17) is provided, said bearing, during normal operation, serving for the axial mounting of the threaded rod (2) in the supporting frame (3), wherein the supporting frame (3) has a first clip (4) and at least one second clip (5), which clips are formed at least substantially in a U-shaped manner, **characterized in that** a contact plate (6) is provided, said contact plate being connected on a first side between limbs of the at least substantially U-shaped supporting frame (3) to the first clip (4) and to the second clip (5), and, on a second side of the supporting frame (3), which side is opposite the first side, the first clip (4) and the second clip (5) form, in a central region, a contact surface which is part of the bearing (17) and on which the threaded rod (2) is at least indirectly supported in the axial direction counter to the support on the contact plate (6), and the contact plate (6) is part of the bearing (17) and the threaded rod (2) is at least indirectly supported in the axial direction of the threaded rod (2) on the contact plate (6).

2. Holding device according to Claim 1, **characterized in that**, in the assembled state of the holding device (1), the first clip (4) and the second clip (5) are arranged partially lying next to each other in the viewing direction of the threaded rod (2).

3. Holding device according to Claim 1 or 2, **characterized in that**, in the assembled state of the holding device (1), the first clip (4) and the second clip (5) are arranged crossing over each other in the viewing direction of the threaded rod (2), and therefore the first clip (4) is arranged lying partially above the second clip (5) in the viewing direction of the threaded rod (2) and the second clip' (5) is arranged partially lying above the first clip (4), as a result of which, in particular, the clips (4, 5) are intermeshed with respect to the direction of the threaded rod (2).

4. Holding device according to one of Claims 1 to 3, **characterized in that**, in the assembled state, the first clip (4) and the second clip (5) are arranged lying on each other *in a planar manner* at at least one end (7) of the supporting frame (3), and **in that** a common eye (8, 9) of the clips (4, 5) is formed at the end (7), wherein the eyes (8, 9) define an axis, with respect to which the clips (4, 5) lie on each other in a planar manner.

5. Holding device according to Claim 4, **characterized in that**, opposite the end (7) of the supporting frame (3), the clips (4, 5) have cutouts forming a passage opening (16) for the threaded rod (2).

6. Holding device according to Claims 3 and 5, **characterized in that** the threaded rod (2) bears against the clips (4, 5) opposite the end (7) of the supporting frame (3) by means of an intermediate ring (20) which is in particular formed from plastic.

7. Holding device according to Claims 3 and 5 or according to Claim 6, **characterized in that** the material thickness of the supporting frame (3) is reinforced, in particular is approximately doubled, in the region of the passage opening (16) by the clips (4, 5) lying one above the other in a planar manner.

## Revendications

1. Dispositif de maintien (1) pour maintenir un dispositif de réglage pour le réglage assisté par force extérieure d'éléments dans un véhicule automobile, en particulier d'un élément de siège ou d'une colonne de direction, comprenant au moins un cadre de support (3) qui sert à recevoir au moins une tige filetée (2) du dispositif de réglage, un élément d'entraînement (15, 40) coopérant avec la tige filetée (2),
un palier (17) étant prévu, lequel sert, en mode de fonctionnement normal, à supporter axialement la tige filetée (2) dans le cadre de support (3), le cadre de support (3) présentant une première pince (4) et au moins une deuxième pince (5), qui sont réalisées au moins essentiellement en forme de U, **caractérisé en ce qu'**il est prévu une plaque d'appui (6) qui est connectée au niveau d'un premier côté entre des branches du cadre de support (3) au moins essentiellement en forme de U à la première pince (4) et à la deuxième pince (5), et au niveau d'un deuxième côté du cadre de support (3) opposé au premier côté, la première pince (4) et la deuxième pince (5) constituent, dans une région centrale, une surface d'appui, qui fait partie du palier (17) et sur laquelle la tige filetée (2) est supportée au moins indirectement dans la direction axiale à l'encontre du support contre la plaque d'appui (6), et la plaque d'appui (6) fait partie du palier (17) et la tige filetée (2) est supportée au moins indirectement dans la direction axiale de la tige filetée (2) sur la plaque d'appui (6).

2. Dispositif de maintien selon la revendication 1, **caractérisé en ce que**
la première pince (4) et la deuxième pince (5) sont disposées, dans l'état monté du dispositif de maintien (1), dans la direction d'observation de la tige filetée (2), en partie l'une à côté de l'autre.

3. Dispositif de maintien selon la revendication 1 ou 2,
**caractérisé en ce que**
la première pince (4) et la deuxième pince (5) sont disposées, dans l'état monté du dispositif de maintien (1), dans la direction d'observation de la tige filetée (2), de manière à se croiser l'une sur l'autre, de telle sorte que la première pince (4), dans la direction d'observation de la tige filetée (2), soit disposée en partie couchée au-dessus de la deuxième pince (5), et que la deuxième pince (5) soit disposée en partie couchée au-dessus de la première pince (4), de sorte que notamment les pinces (4, 5) soient accrochées l'une dans l'autre par rapport à la direction de la tige filetée (2).

4. Dispositif de maintien selon l'une quelconque des revendications 1 à 3,
**caractérisé en ce que**
la première pince (4) et la deuxième pince (5) sont disposées couchées l'une sur l'autre à plat dans l'état monté au niveau d'au moins une extrémité (7) du cadre de support (3), et **en ce qu'**à l'extrémité (7), un oeillet commun (8, 9) des pinces (4, 5) est réalisé, les oeillets (8, 9) définissant un axe par rapport auquel les pinces (4, 5) reposent à plat l'une sur l'autre.

5. Dispositif de maintien selon la revendication 4, **caractérisé en ce**
**qu'**en regard de l'extrémité (7) du cadre de support (3), les pinces (4, 5) présentent des évidements qui constituent une ouverture de passage (16) pour la tige filetée (2).

6. Dispositif de maintien selon les revendications 3 et 5, **caractérisé en ce que**
l'appui de la tige filetée (2) contre les pinces (4, 5) en regard de l'extrémité (7) du cadre de support (3) s'effectue au moyen d'une bague intermédiaire (20), qui est réalisée notamment en plastique.

7. Dispositif de maintien selon les revendications 3 et 5 ou selon la revendication 6,
**caractérisé en ce que**
l'épaisseur de matériau du cadre de support (3) est accrue par les pinces superposées à plat (4, 5) dans la région de l'ouverture de passage (16), notamment vaut approximativement le double.
